# EUROPÄISCHE PATENTSCHRIFT

(11) **EP 0 454 901 B1**
(45) Veröffentlichungstag und Bekanntmachung des Hinweises auf die Patenterteilung: **22.06.1994**
(21) Anmeldenummer: 90122929.4
(22) Anmeldetag: 30.11.1990
(51) Int. Cl.: G01L 9/06, G01L 1/04

(54) **Kraftwandler**
Force sensor
Capteur de force

(30) Priorität: 06.12.1989 CH 4380/89
(43) Veröffentlichungstag der Anmeldung: 06.11.1991
(73) Patentinhaber: SIEMENS-ALBIS AKTIENGESELLSCHAFT, 8047 Zürich (CH)
(72) Erfinder: Willi, Walter, CH-8004 Zürich (CH); Schärli, Matthias, CH-5400 Ennetbaden (CH)

(56) Entgegenhaltungen:
- EP-A- 0 276 889
- PATENT ABSTRACTS OF JAPAN, Band 10, Nr. 288 (P-502)[2344], 30. September 1986; & JP-A-61 107 125

## Beschreibung

Die vorliegende Erfindung betrifft einen Kraftwandler nach dem Oberbegriff des Patentanspruchs 1.

Zur Messung eines mechanischen Druckes werden oft piezoresistive Druckfühler verwendet. Die Funktion dieser Druckfühler, die meistens auf einem Silizium- oder Keramiksubstrat aufgebaut sind, besteht darin, mechanische Spannungen in ein elektrisches Signal umzuwandeln. Dabei weisen diese Druckfühler normalerweise eine Membrane auf, die proportional zu einer auftretenden Druckänderung ausgelenkt wird. Mechanische Spannungen, die dabei auf der Membranoberfläche auftreten, werden in der Folge durch Ausnutzung des piezoresistiven Effekts mittels Widerständen oder integrierten Dehnungsmesselementen (Strain Gauges) in elektrische Signale umgewandelt. Im Gegensatz zu Widerstandsänderungen, die bei geometrischer Verformung von Metallen auftreten, entstehen Widerstandsänderungen bei der Dehnung von Halbleitern oder Dickschichtwiderständen, wie sie z.B. in Herbert Reichl, Hybridintegration, Heidelberg 1986, auf Seite 47 beschrieben werden, hauptsächlich durch Änderung der Leitfähigkeit in Abhängigkeit der mechanischen Spannungen im Kristall.

Bei monolithisch aufgebauten Halbleiterdruckfühlern wird z.B. eine Systemscheibe, die eine Ausnehmung aufweist, mit einer ebenen Trägerscheibe verschweisst, wodurch zwischen den beiden Schichten ein abgeschlossener Hohlraum entsteht. Die durch die Ausnehmung verengte Schicht der Systemscheibe wirkt dabei als Membran, die zu einem mechanischen Druck proportionale Oberflächenspannungen an einen aufgeschweissten oder in die Halbleitermembran eindotierten Dehnungsmessstreifen überträgt. Dieser komplexe Aufbau derartiger Druckfühler erfordert eine Vielzahl technologischer, u.a. fototechnischer Schritte, die einen hohen Kostenaufwand verursachen. Zur Verbesserung der Stabilität und Beständigkeit gegenüber Umwelteinflüssen sind dabei oft zusätzliche Verfahrensschritte notwendig.

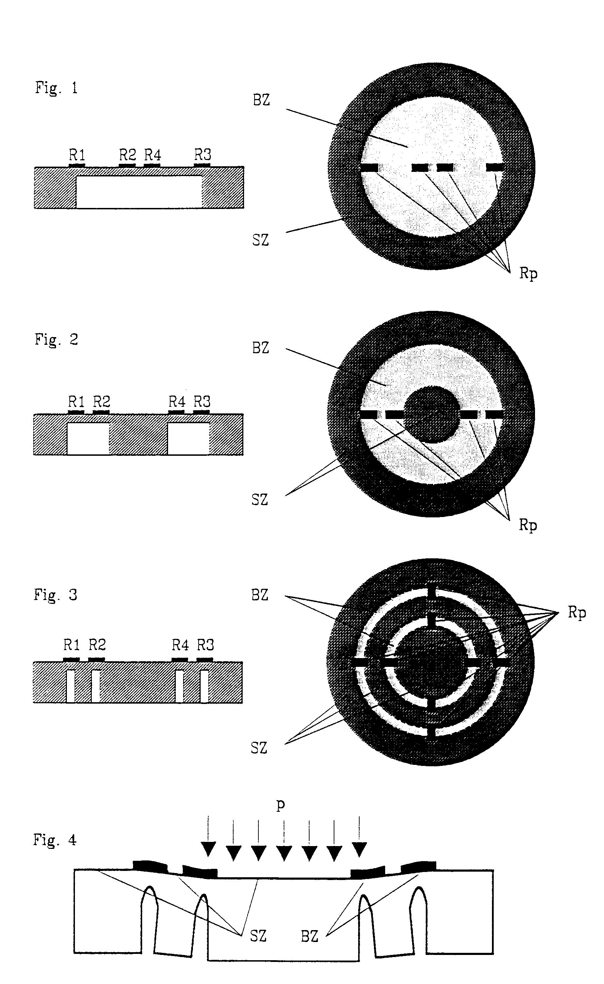

Zur Vermeidung der beschriebenen Nachteile werden Druckfühler deshalb oft unter Verwendung von keramischen Substraten hergestellt. In der Zeitschrift "Technisches Messen" 56 (1989) 6, Seite 245-249 wird der Aufbau eines Drucksensors in Dickschichttechnik gezeigt. Die dort in Bild 2 gezeigten Druckfühler, insbesondere deren Geometrien werden nachfolgend anhand von Fig. 1 und 2 näher erläutert. Fig. 1 zeigt einen Druckfühler mit einer runden Membran bzw. Platte, die durch eine zylinderförmige Ausnehmung des Substrates gebildet wird. Beim Auftreten eines mechanischen Druckes entsteht eine Verformung der Membrane mit entsprechend auftretenden Oberflächenspannungen. Mit der Membrane verbundene Widerstände R1 und R3 befinden sich dabei im Bereich der positiven und Widerstände R2 und R4 befinden sich im Bereich der negativen Biegezone und werden bei Druckeinwirkung gedehnt bzw. verkürzt. Wegen dem weiten Bereich BZ positiver und negativer Biegezonen, die fliessend ineinander übergehen, kann nicht gewährleistet werden, dass die sich ergebenden Widerstandsänderungen der gedehnten bzw. verkürzten Widerstände (R1 und R3) bzw. (R2 und R4) einander jeweils entsprechen. Dies ergibt sich durch die immer leicht unterschiedliche Positionierung der Widerstände sowie den unterschiedlichen Krümmungsverlauf der Membrane innerhalb einer Biegezone. Bedingung für eine lineare Übertragungsfunktion des Druckfühlers ist jedoch die Verwendung gleich grosser Widerstände R1 - R4 und die den auftretenden Druckänderungen betragsmässige Gleichheit der Widerstandsänderungen für die Widerstände R1 - R4. Die gezeigte Membrangeometrie kann demzufolge für Druckfühler mit hohen Ansprüchen an Präzision und Linearität nicht angewendet werden.

Fig. 2 zeigt einen Druckfühler mit einer Kreisringmembran, die durch eine ringförmige Ausnehmung des Substrates gebildet ist. Beim Auftreten eines mechanischen Druckes entsteht bei dieser Membrangeometrie lediglich im Bereich der ringförmigen Ausnehmung eine Verformung der Membrane. Die mittlere Zone SZ der Membrane, die die ursprüngliche Dicke aufweist, wird nicht gebogen Die Zonen negativer und positiver Biegung BZ gehen hier nur noch im Bereich der ringförmigen Ausnehmung fliessend ineinander über, was eine Verbesserung der Linearität gegenuber dem in Fig. 1 gezeigten Druckfühler ergibt. Die Verbesserung der Linearität kann jedoch nur bei exakter Dimensionierung und Positionierung der piezoresistiven Widerstande bzw. mit grossem Aufwand erreicht werden.

Der vorliegenden Erfindung liegt daher die Aufgabe zugrunde, einen Kraftwandler zu schaffen, der mit geringem Aufwand hergestellt werden kann und der sogar bei nicht exakter Positionierung der piezoresistiven Widerstände eine weiter verbesserte Linearität aufweist.

Diese Aufgabe wird durch die im Patentanspruch 1 angegebenen Massnahmen gelöst. Vorteilhafte Ausgestaltungen der Erfindung sind in weiteren Ansprüchen angegeben.

Der erfindungsgemässe Kraftwandler weist folgende Vorteile auf:
Die positiven und negativen Biegezonen werden auf genau definierte Bereiche eingeschränkt und sind beidseitig durch steife Membranteile voneinander getrennt. Die piezoresistiven Widerstände werden in ihren aktiven Zonen, also nicht in der Nähe der Anschlussstellen gedehnt oder verkürzt. Sie konnen folglich radial verschoben werden, solange die Biegezone BZ in einen aktiven Bereich des Widerstandes fällt. Die betragsmässige Widerstandsänderung für Druckänderungen im vorgesehenen Bereich sind für alle piezoresistiven Widerstände gleich. Die erfindungsgemässen Kraftwandler können folglich kostengünstiger und mit verbesserter Linearität hergestellt werden. Zudem zeichnen sie sich durch einen hohen Temperaturgleichlauf sowie durch Hysteresefreiheit aus.

Ferner sind die Kraftwandler gegen mechanische Zerstörung geschützt. Das Erreichen einer maximal zulässigen Kraft kann leicht festgestellt werden. Nebst den piezoresistiven Widerständen können weitere Messfühler verwendet werden.

Die Erfindung wird nachfolgend anhand von Zeichnungen beispielsweise näher erläutert. Dabei zeigt:
- Fig. 1: einen bekannten Druckfühler mit Kreismembran
- Fig. 2: einen bekannten Druckfühler mit Kreisringmembran
- Fig. 3: einen erfindungsgemässen Kraftwandler mit Doppelnutmembran
- Fig. 4: den erfindungsgemässen Kraftwandler mit unter Anwendung eines Druckes p ausgelenkter Membran
- Fig. 5: eine Messbrücke mit vier piezoresistiven Widerständen Rp, die auf einem Membrandurchmesser liegen
- Fig. 6: eine Messbrücke mit zweimal vier, je auf einem Membrandurchmesser liegenden piezoresistiven Widerständen Rp
- Fig. 7: eine weitere funktional gleiche Formgestaltung eines Kraftwandlers - nicht beansprucht
- Fig. 8: den erfindungsgemässen gegen mechanische Zerstörung abgesicherten Kraftwandler mit Maximaldruck-Schalter
Die in Fig.1 bis 3 und Fig.7 gezeigten Kraftwandler sind jeweils links in einem Schnittbild und rechts in einer Draufsicht dargestellt. Fig 1 und 2 entsprechen dem eingangs erläuterten Stand der Technik. Die Membran des in Fig. 3 gezeigten Kraftwandlers weist auf der einen Seite zwei konzentrische Ringnuten auf. Auf die andere Seite der Membran, den Ringnuten gegenüberliegend, sind acht piezoresistive Widerstände Rp aufgebracht, die je eine Biegezone BZ vollständig überdecken und mit ihren Enden, beidseitig der Biegezone BZ, in einen steifen Bereich SZ der Membran hineinragen. Als Substrat für den Druckfühler kann z.B Keramik, Saphir, Quarz, Stahl, Glas oder ein Halbleiter gewählt werden. Bei der Verwendung von Quarz als Substrat könnten aufgrund der piezoelektrischen Eigenschaften dieses Materials zu einem mechanischen Druck proportionale Spannungen direkt vom Substrat abgenommen werden. Z.B. könnten Anschlussleitungen auf der gleichen oder getrennt je auf einer Seite des Substrats zugeführt werden. Fig. 4 zeigt einen Kraftwandler gemäss Fig.3, dessen Membran unter Einwirkung eines Druckes p ausgelenkt wurde. Durch die Verwendung von zwei Ringnuten werden steife Membranzonen SZ geschaffen, welche die Biegezonen BZ voneinander trennen. Die von den beiden Biegezonen BZ eingeschlossene starre Zone SZ wirkt dabei, insbesondere bei ungleicher Druckverteilung auf der Membran als Torsionsring. Die Biegezonen BZ werden folglich auf einen sehr engen, je einer Nut gegenüberliegenden Teil beschränkt. Den Ringnuten gegenüberliegend aufgebrachte Widerstände überlappen die engen Biegezonen BZ auch bei unpräziser Positionierung. Alle Widerstandsenden mit den elektrischen Anschlüssen ragen dabei relativ weit in die jeweilige steife Zone SZ der Membrane hinein. Dies ergibt eine ausgezeichnete Linearität der Messkurve auch bei hohen Drücken bzw. weit ausgelenkter Membran. Bei der gezeigten Auslenkung der Membrane werden die der inneren Nut gegenüberliegenden Widerstände verkürzt und nehmen folglich einen tieferen Widerstandswert an. Die gedehnten, der äusseren Nut gegenüberliegenden Widerstände nehmen einen höheren Widerstandswert an. Beim Auftreten eines Unterdruckes erfolgt die Auslenkung der Membrane in gegensätzlicher Richtung.

Durch die entsprechende Wahl der Nuttiefe und des Nutabstandes kann der hergestellte Druckfühler dem zu messenden Druckbereich angepasst werden. Für grössere Druckbereiche werden dabei geringere Nuttiefen und Nutabstände gewählt. Durch entsprechende Wahl der Nutbreite kann ferner das Auflösungsvermögen des Druckfühlers variiert werden. Nebst der Wahl von ringförmig verlaufenden konzentrischen Nuten können auch rechteckförmig verlaufende konzentrische Nuten gewählt werden.

Die Verwendung von mehreren symmetrisch auf der Membran angeordneten und in einer Messbrücke zusammengeschalteten piezoresistiven Widerständen Rp erlaubt einerseits die Verbesserung der Messgenauigkeit. Dabei werden Unregelmässigkeiten in der Beschaffenheit des keramischen Substrats oder bei der Herstellung der piezoresistiven Widerstände Rp oder Ringnuten ausgemittelt. Unregelmässigkeiten bei der Herstellung von Dickschichtwiderständen, die nicht auf denselben Membrandurchmesser aufgebracht werden, können weitgehend vermieden werden, indem alle Widerstände Rp um 45 Grad zur Rakelbewegung gedreht vorgesehen sind (Herbert Reichl, Hybridintegration, Heidelberg 1986, Seite 91-94). Weitere Unlinearitäten und Messfehler können vermieden werden, indem die Widerstände Rp mit duktilen Materialien an die Messbrücke angeschlossen werden. Andererseits erlaubt die Auswertung der Widerstandsänderungen von je auf einem Kreisdurchmesser liegenden Widerständen Rp die richtungsabhängige Vermessung einer Membranverdrehung. Z.B. können die Bewegungen eines mit der Membrane verbundenen Steuerknüppels in X- und Y-Richtung aufgelöst gemessen werden.

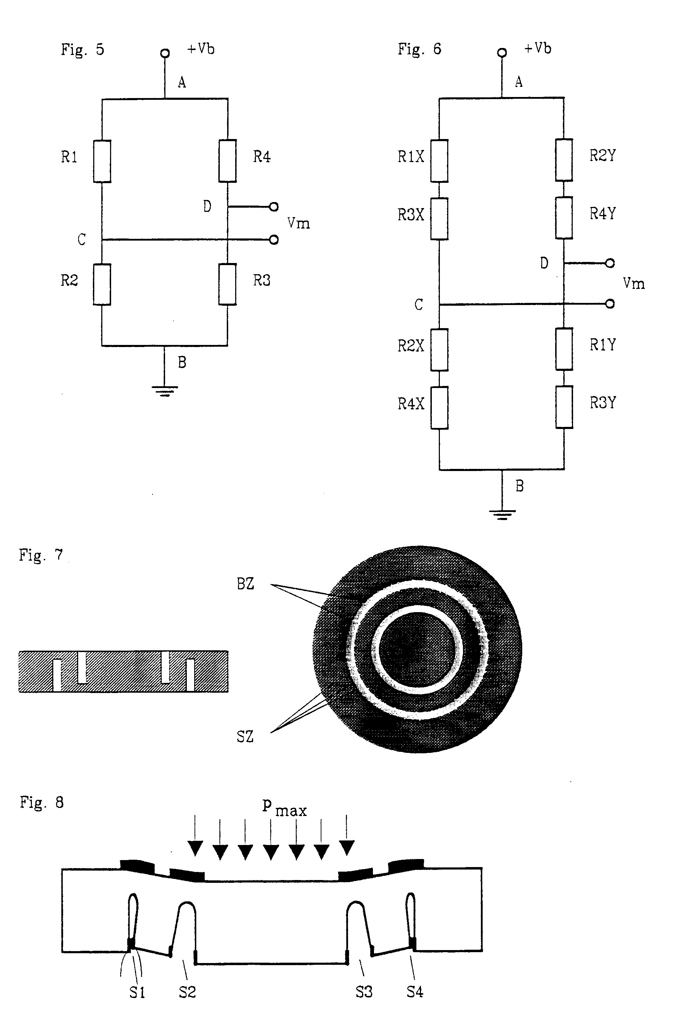

Fig. 5 zeigt eine Messbrücke mit vier Kontakten A, B, C, D und vier auf einem Membrandurchmesser liegenden piezoresistiven Widerständen (R1,..,R4), der zwischen den Kontakten A, B eine Versorgungsspannung Vb zugeführt wird und die zwischen den Kontakten D, C eine Messspannung Vm abgibt. Dabei sind die, der äusseren Nut gegenüberliegenden Widerstände R1 bzw. R3 zwischen die Kontakte A, C bzw. D, B und die der inneren Nut gegenüberliegenden Widerstände R2 bzw. R4 zwischen die Kontakte C, B bzw. A, D geschaltet. Fig. 6 zeigt eine Messbrücke mit vier Kontakten A, B, C, D und zweimal vier, auf einem Membrandurchmesser liegenden piezoresistiven Widerständen R1X,..,R4X; R1Y,..,R4Y, der zwischen den Kontakten A, B eine Versorgungsspannung Vb zugeführt wird und die zwischen den Kontakten D, C eine Messspannung Vm abgibt. Dabei sind die, der äusseren Nut gegenübeliegenden Widerstände R1X und R3X bzw. R1Y und R3Y seriell zwischen die Kontakte A, C bzw D, B und die der inneren Nut gegenüberliegenden Widerstände R2X und R4X bzw. R2Y und R4Y zwischen die Kontakte C, B bzw. A, D geschaltet.

Der erfindungsgemässe Kraftwandler ist ferner zur Messung von mechanischen Kräften oder Momenten geeignet, die vorzugsweise auf die starre Membranfläche eingreifen. Folglich kann der erfindungsgemässe Druckfühler als Kraft-, Weg-, Rauhigkeits-, Beschleunigungs-, Drall- oder Strömungsmesser verwendet werden. Zur Messung des Weges oder der Rauhigkeit einer Oberfläche werden die Wegdifferenzen z.B. mit einem Stab auf die Membrane übertragen, so dass die Membrane um den zu bestimmenden Weg ausgelenkt wird. Zur drall- oder richtungsabhängigen Beschleunigungs- oder Strömungsmessung wird z.B eine Masse, vorzugsweise eine Kugel, über einen Hebelarm fest mit der steifen Membranoberfläche verbunden. Die Kugel wird dabei infolge eines auftretenden Dralls, einer Beschleunigung oder eines die Kugel umströmenden flüssigen oder gasförmigen Mediums in eine Richtung ausgelenkt. Auf dem Druck- bzw. Kraftfühler auf orthogonalen Membrandurchmessern angeordnete piezoresistive Widerstände Rp wandeln dabei die entstehenden Membranbewegungen richtungsabhängig in elektrische Signale um. Die Strömungsgeschwindigkeit eines Mediums kann auch gemessen werden, indem die Membrane mit einer Öffnung versehen ist, die permanent den Durchtritt des Mediums mit der zu messenden Strömung erlaubt. Durch die Verbindung eines Steuerknüppels mit der zentralen,steifen Membranzone kann der Drucksensor ferner als Steuerelement verwendet werden, der zu den Knüppelbewegungen proportionale elektrische Signale aufgelöst nach X- und Y- Richtung abgibt. Je vier auf zwei orthogonalen Membrandurchmessern liegende Widerstände werden für diesen Fall je in einer Messbrücke nach Fig. 5 zusammengeschaltet. Zur Messung absoluter Drücke kann der Druckfühler einseitig mit einer Kammer abgeschlossen werden, die unter einem vorgegebenen Referenzdruck steht.

Die Fertigung der Kraftwandler in Dickschichttechnik erlaubt ferner das Aufbringen weiterer elektrischer Komponeneten auf das Substrat, welches die Membrane aufweist, oder sogar direkt auf die zentrale, steife Zone SZ der Membrane. Eichung und Abgleich des Druckfühlers können bereits im Nutzen bzw. auf dem Wafer erfolgen.

In Fig.7 wird ein Kraftwandler gezeigt, dessen Ringnuten auf gegenüberliegenden Seiten der Membran aufgebracht sind. Auch in diesem Fall werden entstehende Biegezonen BZ auf einen engen Bereich beschränkt und von starren Zonen SZ umgeben. Diese Anordnung der Nuten ermöglicht z.B. eine bessere räumliche oder elektrische Trennung der Messfühler.

Fig.8 zeigt den Kraftwandler mit unter Maximaldruck pₘₐₓ ausgelenkter Membran. Die Breite der Nuten ist in diesem Fall derart bemessen, dass abhängig von der Richtung der Membranauslenkung die Nut-Kanten bzw. Nut-Wände der ersten oder zweiten Nut beim Erreichen des Maximaldruckes pₘₐₓ aufeinandertreffen. Bei einer zusätzlichen Erhöhung des angelegten Druckes erfolgt deshalb keine weitere Auslenkung der Membran. Die Membran ist folglich blockiert, so dass auch bei ausserordentlich hohen Drücken keine Überdehnung der Membran oder der Messfühler eintritt.

Ferner wurden in Fig.8 die Nutkanten des Kraftwandlers mit Schaltkontakten versehen, welche die Schalter S1,...,S4 bilden. Beim Erreichen des Maximaldruckes pₘₐₓ treffen die Kontakte aufeinander. Einer mit den Schaltern S1,...,S4 verbundenen Kontrollschaltung wird dieser Vorgang demnach sofort mitgeteilt, ohne dass der jeweils gemessene Druck z.B. mittels eines Rechners mit einem vorgegebenen Maximalwert verglichen werden muss.

Zur Erhöhung der Empfindlichkeit des Kraftwandlers gemäss Fig. 3 kann die von den beiden Biegezonen BZ eingeschlossene steife Zone SZ auf mindestens einer Seite des Drucksensors mit vorzugsweise vier oder mehr radial verlaufenden Schlitzen oder Furchen versehen werden. Die Anzahl sowie Breite und Tiefe der Schlitze wird vorzugsweise derart gewählt, dass sich die Biegezonen BZ nicht über den linear arbeitenden Bereich der Widerstände Rp ausdehnen. Durch die Anzahl, Breite und Tiefe der Schlitze können bei gleichbleibender sonstiger Geometrie ferner der Druckbereich sowie das Verhältnis maximaler Arbeitsbereich zu Berstdruck variiert werden.

## Patentansprüche

1. Kraftwandler mit einem plattenförmigen Substrat, das eine Membrananordnung aufweist und mit mindestens einem auf dem Substrat aufliegenden Messfühler, dessen abgebbarer Messwert sich proportional zu den an der Auflagestelle auftretenden Oberflächenspannungen ändert, **dadurch gekennzeichnet**, dass mindestens eine innere und eine äussere Membran durch mindestens zwei in sich geschlossene und in das Substrat auf einer Seite konzentrisch eingelassene Nuten gebildet sind, und dass die Auflagestelle für den Messfühler (R1; R2; R3; R4) auf der anderen Seite des Substrates einer Nut gegenüberliegt.

2. Kraftwandler nach Anspruch 1, **dadurch gekennzeichnet**, dass das Substrat aus Glas, Metall, emailliertem Stahl, Keramik, Saphir, Quarz oder einem Halbleiter besteht.

3. Kraftwandler nach Anspruch 1 oder 2, **dadurch gekennzeichnet**, dass als Messfühler piezoresistive Widerstände (Rp), die in Dick- oder Dünnschichttechnik auf das Substrat aufgetragen werden, vorgesehen sind.

4. Kraftwandler nach Anspruch 3, **dadurch gekennzeichnet**, dass alle piezoresistiven Widerstände (Rp) um 45 Grad gedreht gegenüber der Rakelbewegung auf dem Substrat angeordnet sind.

5. Kraftwandler nach einem der vorhergehenden Ansprüche, **dadurch gekennzeichnet**, dass den zwei Nuten gegenüberliegend, auf mindestens einem, vorzugsweise auf zwei um zumindest annähernd 90 Grad gegeneinander verschobenen Membrandurchmessern je vier piezoresistive Widerstände (Rp) vorgesehen sind.

6. Kraftwandler nach Anspruch 5, **dadurch gekennzeichnet**, dass mindestens eine Messbrücke mit zwei piezoresistiven Widerständen (R1, R4), die einerseits mit einem Kontakt A und andererseits mit einem Kontakt (C bzw. D) verbunden sind und zwei piezoresistiven Widerständen (R2, R3), die einerseits mit einem Kontakt (B) und andererseits mit dem Kontakt (C bzw. D) verbunden sind, vorgesehen ist, dass den Kontakten (A, B) eine Versorgungsspannung (Vb) zugeführt und den Kontakten (C, D) ein Messignal (Vm) entnommen wird und dass die Widerstände (R1, R3) der äusseren Nut und die Widerstände (R2, R4) der inneren Nut gegenüberliegen.

7. Kraftwandler nach Anspruch 5, **dadurch gekennzeichnet**, dass eine Messbrücke mit einer ersten Gruppe von vier auf einem ersten Membrandurchmesser liegenden piezoresistiven Widerständen (R1X, R2X, R3X und R4X) und einer zweiten Gruppe von vier auf einem zweiten Membrandurchmesser liegenden piezoresistiven Widerständen (R1Y, R2Y, R3Y und R4Y) vorgesehen ist, dass die der äusseren Nut gegenüberliegenden Widerstände (R1X, R3X) der ersten Gruppe und die der inneren Nut gegenüberliegenden Widerstände (R2Y, R4Y) der zweiten Gruppe je seriell zusammengeschaltet und einerseits mit einem Kontakt (A) und andererseits mit einem Kontakt (C bzw. D) verbunden sind, dass die der inneren Nut gegenüberliegenden Widerstände (R2X, R4X) der ersten Gruppe und die der äusseren Nut gegenüberliegenden Widerstände (R1Y, R3Y) der zweiten Gruppe je seriell zusammengeschaltet und einerseits mit einem Kontakt (B) und andererseits mit dem Kontakt (C bzw. D) verbunden sind und dass den Kontakten (A, B) eine Versorgungsspannung (Vb) zugeführt und den Kontakten (C, D) ein Messignal (Vm) entnommen wird.

8. Kraftwandler nach einem der vorhergehenden Ansprüche, **dadurch gekennzeichnet**, dass die Nuten im Substrat zumindest annähernd rechteck- oder kreisförmig verlaufen.

9. Kraftwandler nach einem der vorhergehenden Ansprüche, **dadurch gekennzeichnet**, dass nebst den piezoresistiven Widerständen (Rp) weitere elektrische Bauteile auf der inneren Membran oder der Oberfläche des die Membran enthaltenden Substrats aufgebracht sind.

10. Kraftwandler nach einem der vorhergehenden Ansprüche zur Messung eines absoluten Druckes, **dadurch gekennzeichnet**, dass eine unter einem vorgegebenen Referenzdruck stehende Kammer, die die Membranen umschliesst, einseitig auf das Substrat aufgebracht ist.

11. Kraftwandler nach einem der Ansprüche 1 - 9 zur Messung der Strömungsgeschwindigkeit eines flüssigen oder gasförmigen Mediums, **dadurch gekennzeichnet**, dass die innere Membran eine Öffnung aufweist, die den Durchtritt des Mediums zulässt.

12. Kraftwandler nach einem der Ansprüche 1 - 10, **dadurch gekennzeichnet**, dass die innere Membran mit einem Steuerknüppel verbunden ist.

13. Kraftwandler nach einem der Ansprüche 1 - 10 insbesondere zur Vermessung eines Dralls, einer Beschleunigung oder einer Strömung, **dadurch gekennzeichnet**, dass die über einen Hebelarm mit einer vorzugsweise kugelförmigen Masse verbunden ist.

14. Kraftwandler nach einem der Ansprüche 1 bis 10 zur Messung einer Weglänge, **dadurch gekennzeichnet**, dass Wegdifferenzen über einen Stab auf die innere Membran übertragbar sind.

15. Kraftwandler nach einem der vorhergehenden Ansprüche, **dadurch gekennzeichnet**, dass die Breite der Nuten derart gewählt ist, dass die Nut-Wände oder Nut-Kanten beim Eintreten eines vorgewählten Druckes aufeinandertreffen.

16. Kraftwandler nach einem der vorhergehenden Ansprüche, **dadurch gekennzeichnet**, dass die Kanten der Nuten mit Schaltkontakten versehen sind.

17. Kraftwandler nach einem der vorhergehenden Ansprüche, **dadurch gekennzeichnet**, dass auf dem Quartzsubstrat Anschlussleitungen vorgesehen sind, die zur Abnahme von Signalen dienen, die sich entsprechend den vorhandenen mechanischen Spannungen ändern.

18. Kraftwandler nach einem der vorhergehenden Ansprüche, **dadurch gekennzeichnet**, dass die innere Membran auf mindestens einer Seite des Kraftwandlers mit radial verlaufenden Schlitzen versehen ist.

19. Kraftwandler nach Anspruch 18, **dadurch gekennzeichnet**, dass die Anzahl sowie die Breite und Tiefe der Schlitze derart gewählt ist, dass sich die den Nuten gegenüberliegenden Biegezonen (BZ) nicht über den linear arbeitenden Bereich der Widerstände (Rp) ausdehnen.

20. Kraftwandler nach Anspruch 18, **dadurch gekennzeichnet**, dass die Anzahl sowie die Breite und Tiefe der Schlitze entsprechend dem gewünschten Druckbereich und/oder dem gewünschten Verhältnis maximaler Arbeitsbereich zu Berstdruck gewählt ist.

## Claims

1. Transducer with a plate-shaped substrate which has a diaphragm arrangement and with at least one measuring sensor resting on the substrate, the outputable measured value of which measuring sensor changes in proportion to the surface tensions occurring on the bearing point, characterized in that at least an inner and an outer diaphragm are formed by at least two grooves which are closed upon themselves and are concentrically embedded into the substrate on one side, and in that the bearing point for the measuring sensor (R1; R2; R3; R4) on the other side of the substrate lies opposite a groove.

2. Transducer according to claim 1, characterized in that the substrate consists of glass, metal, enamelled steel, ceramics, sapphire, quartz or a semiconductor.

3. Transducer according to claim 1 or 2, characterized in that piezoresistive resistors (Rp) which are applied onto the substrate using thick-layer or thin-layer technology are provided as measuring sensors.

4. Transducer according to claim 3, characterized in that all piezoresistive resistors (Rp) are arranged on the substrate rotated by 45 degrees with respect to the blade movement.

5. Transducer according to one of the preceding claims, characterized in that opposite the two grooves in each case four piezoresistive resistors (Rp) are provided on at least one, preferably on two diaphragm diameters displaced with respect to one another by at least approximately 90 degrees.

6. Transducer according to claim 5, characterized in that at least one measuring bridge is provided, having two piezoresistive resistors (R1, R4) which are connected on one side to a contact A and on the other side to a contact (C or D) and having two piezoresistive resistors (R2, R3) which are connected on one side to a contact (B) and on the other side to the contact (C or D), in that a supply voltage (Vb) is supplied to the contacts (A, B) and a measuring signal (Vm) is taken from the contacts (C, D) and in that the resistors (R1, R3) lie opposite the outer groove and the resistors (R2, R4) lie opposite the inner groove.

7. Transducer according to claim 5, characterized in that a measuring bridge is provided, having a first group of four piezoresistive resistors (R1X, R2X, R3X and R4X) lying on a first diaphragm diameter and a second group of four piezoresistive resistors (R1Y, R2Y, R3Y and R4Y) lying on a second diaphragm diameter, in that the resistors (R1X, R3X) of the first group lying opposite the outer groove and the resistors (R2Y, R4Y) of the second group lying opposite the inner groove are in each case connected together serially and are connected on one side to a contact (A) and on the other side to a contact (C or D), in that the resistors (R2X, R4X) of the first group lying opposite the inner groove and the resistors (R1Y, R3Y) of the second group lying opposite the outer groove are in each case connected together serially and are connected on one side to a contact (B) and on the other side to the contact (C or D) and in that a supply voltage (Vb) is supplied to the contacts (A, B) and a measuring signal (Vm) is taken from the contacts (C, D).

8. Transducer according to one of the preceding claims, characterized in that the grooves in the substrate extend at least approximately in a rectangular or circular manner.

9. Transducer according to one of the preceding claims, characterized in that in addition to the piezoresistive resistors (Rp) further electrical components are applied to the inner diaphragm or the surface of the substrate containing the diaphragm.

10. Transducer according to one of the preceding claims for measuring an absolute pressure, characterized in that a chamber under a specified reference pressure, which chamber encloses the diaphragms, is applied on one side of the substrate.

11. Transducer according to one of claims 1 - 9 for measuring the flow speed of a liquid or gaseous medium, characterized in that the inner diaphragm has an opening which allows the passage of the medium.

12. Transducer according to one of claims 1 - 10, characterized in that the inner diaphragm is connected to a control stick.

13. Transducer according to one of claims 1 - 10 in particular for measuring a twist, an acceleration or a flow, characterized in that the [sic] is connected by way of a lever arm to a preferably spherical mass.

14. Transducer according to one of claims 1 to 10 for measuring a path length, characterized in that path differences can be transmitted by way of a bar to the inner diaphragm.

15. Transducer according to one of the preceding claims, characterized in that the width of the grooves is selected in such a way that the groove walls or groove edges meet upon the occurrence of a preselected pressure.

16. Transducer according to one of the preceding claims, characterized in that the edges of the grooves are provided with switching contacts.

17. Transducer according to one of the preceding claims, characterized in that on the quartz substrate there are provided connecting leads which serve to accept signals which change according to the existing mechanical stresses.

18. Transducer according to one of the preceding claims, characterized in that the inner diaphragm on at least one side of the transducer is provided with radially extending slots.

19. Transducer according to claim 18, characterized in that the number and the width and depth of the slots are selected such that the bending zones (BZ) lying opposite the grooves do not extend over the linearly operating region of the resistors (Rp).

20. Transducer according to claim 18, characterized in that the number and the width and depth of the slots is selected corresponding to the desired pressure region and/or the desired ratio of maximum operating region to bursting pressure.

## Revendications

1. Transducteur de force comportant un substrat en forme de plaque, qui possède un dispositif à membrane, et au moins un capteur de mesure, qui est placé sur le substrat et dont la valeur de mesure, qui peut être délivrée, varie proportionnellement aux tensions de surface apparaissant au niveau du point d'application, caractérisé par le fait qu'au moins une membrane intérieure et une membrane extérieure sont formées par au moins deux rainures, qui sont fermées sur elles-mêmes et sont ménagées concentriquement dans une face du substrat, et que le point d'application pour le capteur de mesure (R1; R2; R3; R4) est situé, sur l'autre côté du substrat, à l'opposé d'une rainure.

2. Transducteur de force suivant la revendication 1, caractérisé par le fait que le substrat est constitué par du verre, un métal, de l'acier émaillé, une céramique, du saphir, du quartz ou un semiconducteur.

3. Transducteur de force suivant la revendication 1 ou 2, caractérisé par le fait qu'il est prévu, comme capteurs de mesure, des résistances piézorésistives (Rp), qui ont été déposées sur le substrat selon la technique des couches épaisses ou des couches minces.

4. Transducteur de force suivant la revendication 3, caractérisé par le fait que toutes les résistances piézorésistives (Rp) sont disposées sur le substrat en étant pivotées de 45 degrés par rapport au déplacement de la racle.

5. Transducteur de force suivant l'une des revendications précédentes, caractérisé par le fait que respectivement quatre résistances piézorésistives (Rp) sont disposées, à l'opposé de deux rainures, sur au moins un diamètre et de préférence sur deux diamètres d'une membrane, décalés réciproquement au moins approximativement de 90 degrés.

6. Transducteur de force suivant la revendication 5, caractérisé par le fait qu'il est prévu au moins un pont de mesure comportant deux résistances piézorésistives (R1, R4), qui sont reliées d'une part à un contact (A) et d'autre part à un contact (C ou D), et deux résistances piézorésistives (R2, R3), qui sont reliées d'une part à un contact (B) et d'autre part au contact (C ou D), qu'une tension d'alimentation (Vb) est envoyée aux contacts (A, B) et qu'un signal de mesure (Vm) est prélevé sur les contacts (C, D), et que les résistances (R1, R3) sont disposées à l'opposé de la rainure extérieure et que les résistances (R2, R4) sont disposées à l'opposé de la rainure intérieure.

7. Transducteur de force suivant la revendication 5, caractérisé par le fait qu'il est prévu un pont de mesure comportant un premier groupe de quatre résistances piézorésistives (R1X, R2X, R3X et R4X), situées sur un premier diamètre de la membrane, et un second groupe de quatre résistances piézorésistives (R1Y, R2Y, R3Y et R4Y) situées sur un second diamètre de la membrane, que les résistances (R1X, R3X) du premier groupe, qui sont situées à l'opposé de la rainure extérieure, et les résistances (R2Y, R4Y), situées à l'opposé de la rainure intérieure, du second groupe sont interconnectêes respectivement en série et sont reliées d'une part à un contact (A) et d'autre part à un contact (C ou D), que les résistances (R2X, R4X), situées à l'opposé de la rainure intérieure, du premier groupe et les résistances (R1Y, R3Y), situées à l'opposé de la rainure extérieure, du second groupe sont interconnectées respectivement en série et sont reliées d'une part à un contact (B) et d'autre part au contact (C ou D), et une tension d'alimentation (Vb) est envoyée aux contacts (A, B) et qu'un signal de mesure (Vm) est prélevé sur les contacts (C, D).

8. Transducteur de force suivant l'une des revendications précédentes, caractérisé par le fait que les rainures ménagées dans le substrat s'étendent au moins approximativement avec une forme rectangulaire ou avec une forme circulaire.

9. Transducteur de force suivant l'une des revendications précédentes, caractérisé par le fait qu'en dehors des résistances piézorésistives (Rp), d'autres composants électriques sont disposés sur la membrane intérieure ou sur la surface du substrat contenant la membrane.

10. Transducteur de force suivant l'une des revendications précédentes pour la mesure d'une pression absolue, caractérisé par le fait qu'une chambre, qui est placée à une pression de référence prédéterminée entoure les membranes, et est déposée sur une face du substrat.

11. Transducteur de force suivant l'une des revendications 1-9 pour la mesure de la vitesse d'écoulement d'un fluide liquide ou gazeux, caractérisé par le fait que la membrane intérieure possède une ouverture, qui autorise le passage du fluide.

12. Transducteur de force suivant l'une des revendications 1-10, caractérisé par le fait que la membrane intérieure est reliée à un levier de commande.

13. Transducteur de force suivant l'une des revendications 1-10, notamment pour la mesure d'une tension, d'une accélération ou d'un écoulement, caractérisé par le fait que la membrane est reliée par l'intermédiaire d'un bras de levier à une masse de préférence de forme sphérique.

14. Transducteur de force suivant l'une des reven-dications 1 à 10 pour la mesure d'une distance de déplacement, caractérisé par le fait que les différences de la course de déplacement peuvent être transmises par l'intermédiaire d'un barreau à la membrane inférieure.

15. Transducteur de force suivant l'une des revendications précédentes, caractérisé par le fait que la largeur des rainures est choisie de telle sorte que les parois de la rainure ou les bords de la rainure se touchent lors de l'apparition d'une pression présélectionnée.

16. Transducteur de force suivant l'une des revendications précédentes, caractérisé par le fait que les bords des rainures comportent des contacts de commutation.

17. Transducteur de force suivant l'une des revendications précédentes, caractérisé par le fait que sur le substrat en quartz sont prévues des lignes de raccordement, qui servent à prélever des signaux qui varient conformément aux contraintes mécaniques existantes.

18. Transducteur de force suivant l'une des revendications précédentes, caractérisé par le fait que la membrane intérieure comporte des fentes radiales, sur au moins un côté du transducteur de force.

19. Transducteur de force suivant la revendication 18, caractérisé par le fait que le nombre ainsi que la profondeur et la largeur des fentes sont choisis de telle sorte que les zones de pliage (BZ), qui sont situées à l'opposé des rainures, ne s'étendent pas sur la gamme de travail linéaire de la résistance (Rp).

20. Transductuer de force suivant la revendication 18, caractérisé par le fait que le nombre ainsi que la largeur et la profondeur des fentes sont choisis en fonction de la gamme désirée de pressions et/ou du rapport désiré de la gamme maximale de travail à la pression d'éclatement.
